# EUROPEAN PATENT APPLICATION

(11) **EP 4 391 172 A1**
(43) Date of publication of application: **26.06.2024**
(21) Application number: 23204750.6
(22) Date of filing: 19.10.2023
(51) Int. Cl.: H01M 50/204, H01M 50/211, H01M 50/224, H01M 50/289, H01M 10/052

(54) **BATTERY MODULE**

(30) Priority: 20.12.2022 KR 20220179558
(71) Applicant: SK On Co., Ltd., Seoul 03161 (KR)
(72) Inventor: YOO, Tak Kyung, 34124 Daejeon (KR); LEE, Seung Hun, 34124 Daejeon (KR); LEE, Jeong Joo, 34124 Daejeon (KR)
(74) Representative: Prüfer & Partner mbB Patentanwälte · Rechtsanwälte

(57) **Abstract**

Battery modules (1) are disclosed. In an implementation, a battery module (1) comprises a plurality of sub-battery units (10) sequentially disposed in a front-rear direction between forward and rearward sides of the battery module (1), each of the plurality of sub-battery units (10) including a first end and a second end; a first side cover (53) coupled to the first ends of the plurality of sub-battery units (10); and a second side cover (54) coupled to the second ends of the plurality of sub-battery units and positioned opposite the first side cover (53). Each of the plurality of sub-battery units includes a housing (300) open toward the first side cover (53), the second side cover (54), and a bottom of the housing (300), and a plurality of battery cells (1100) accommodated in the housing (300) and sequentially disposed in the front-rear direction.

## Description

### TECHNICAL FIELD

The disclosed technology relates to a battery module, and more particularly to a battery module including a structure that can prevent the spread of fire in the event of a fire.

### BACKGROUND

During the charging and discharging of a secondary battery, lithium ions move from one side of the battery to the other. In the event of a fire, however, such lithium ions can cause the fire to easily spread, and eventually the fire can quickly spread within an electric vehicle using secondary batteries. In such a situation, occupants of the electric vehicle may not have enough time to escape from the fire.

(Patent Document 1) KR 10-22413 3 3 B1

### SUMMARY

The disclosed technology can be implemented in some embodiments to provide a battery module that can prevent the spread of fire in the event of a fire.

In one aspect of the disclosed technology, a battery module may include a plurality of sub-battery units sequentially disposed in a front-rear direction, each of the plurality of sub-battery units extending from an end and leading to other end; a first side cover coupled to the ends of the plurality of sub-battery units; and a second side cover coupled to the other ends of the plurality of sub-battery units and positioned opposite the first side cover, wherein each of the plurality of sub-battery units includes a housing opened toward the first side cover, the second side cover, and a bottom; and a plurality of battery cells accommodated in the housing and sequentially disposed in the front-rear direction.

In an embodiment of the disclosed technology, there can be provided a battery module preventing the spread of fire in the event of a fire.

The battery module based on an embodiment of the disclosed technology can be widely applied to green technology fields, such as electric vehicles, battery charging stations, solar power generation using other batteries, or wind power generation.

The battery module based on an embodiment of the disclosed technology can be used for eco-friendly electric vehicles or hybrid vehicles to prevent climate change by suppressing the emission of air pollution and greenhouse gases.

### BRIEF DESCRIPTION OF THE DRAWINGS

The accompanying drawings, which are included to provide a further understanding of the disclosure and are incorporated in and constitute a part of the disclosure, illustrate embodiments of the disclosure and together with the description serve to explain the principle of the disclosure.
FIG. 1 illustrates a battery cell based on an embodiment of the disclosed technology.
FIG. 2 illustrates a battery cell assembly based on an embodiment of the disclosed technology.
FIG. 3 illustrates a sub-battery unit including a housing based on an embodiment of the disclosed technology.
FIG. 4 illustrates a sub-battery unit including a bus bar unit.
FIG. 5 illustrates a battery module based on an embodiment of the disclosed technology.
FIG. 6 illustrates a first-side bus bar unit based on an embodiment of the disclosed technology.
FIG. 7 illustrates a second-side bus bar unit based on an embodiment of the disclosed technology.
FIG. 8 illustrates a battery module including a cover unit.
FIG. 9 illustrates in detail a first side cover and a second side cover based on an embodiment of the disclosed technology.
FIG. 10 illustrates a battery module in which a cover unit is coupled to a plurality of sub-battery units.
FIG. 11 is a cross-sectional view of a battery module taken along A1-A2 of FIG. 10.
FIG. 12 is a cross-sectional view of a battery module taken along B 1-B2 of FIG. 10.
FIG. 13 is a cross-sectional view of a battery module taken along B 1-B2 of FIG. 10 and illustrates a side cover including a side cover bottom.

### DETAILED DESCRIPTION

Reference will now be made in detail to embodiments of the disclosed technology, examples of which are illustrated in the accompanying drawings. However, the following description is merely an example and does not limit the disclosed technology to a specific implementation.

The disclosed technology can be implemented in some embodiments to provide a secondary battery that includes a structure that can prevent or reduce the spread of a fire in the secondary battery. In addition, the disclosed technology can be implemented in some embodiments to provide a secondary battery that includes a structure that can prevent or reduce toxic gas releases when the fire occurs in the battery.

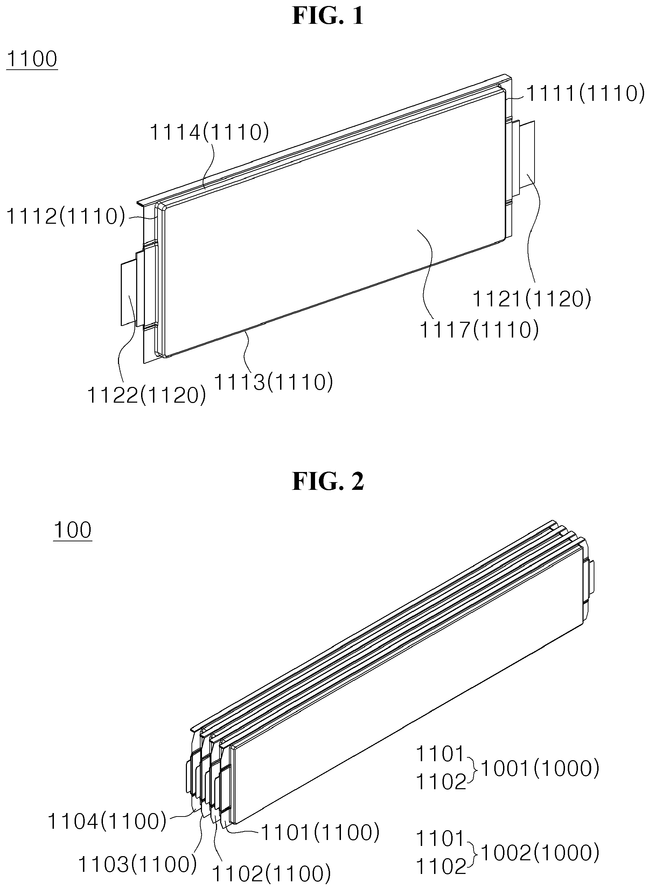

FIG. 1 illustrates a battery cell 1100 based on an embodiment of the disclosed technology. FIG. 1 shows one face of the battery cell 1100, for example, a first cell face 1117 forming one face of the battery cell 1100.

Referring to FIG. 1, the battery cell 1100 may be a secondary battery. For example, the battery cell 1100 is capable of charging and/or discharging. For example, the battery cell 1100 may be a lithium-ion battery.

The battery cell 1100 may include a cell body 1110. The cell body 1110 may include two ends. For example, the cell body 1110 may extend from one end toward the other end. For example, the cell body 1110 may include a first cell end 1111 and a second cell end 1112. For example, the cell body 1110 may extend from the first cell end 1111 toward the second cell end 1112.

The first cell end 1111 and the second cell end 1112 may form a part of an edge of the cell body 1110. The first cell end 1111 and the second cell end 1112 may be positioned opposite each other.

A longitudinal direction of the battery cell 1100 may indicate a direction in which the battery cell 1100 extends. For example, the longitudinal direction of the battery cell 1100 may be parallel to a direction from the first cell end 1111 to the second cell end 1112.

The cell body 1110 may include a third cell end 1113 and a fourth cell end 1114. The third cell end 1113 and the fourth cell end 1114 may form a remaining part of the edge of the cell body 1110.

For example, the first cell end 1111, the second cell end 1112, the third cell end 1113, and the fourth cell end 1114 may form the edge of the cell body 1110. For example, the first cell end 1111, the fourth cell end 1114, the second cell end 1112, and the third cell end 1113 may be sequentially connected.

The third cell end 1113 may form a lower end of the cell body 1110. For example, the third cell end 1113 may extend from the lower end of the first cell end 1111 toward a lower end of the second cell end 1112.

The fourth cell end 1114 may form an upper end of the cell body 1110. For example, the fourth cell end 1114 may extend from the upper end of the first cell end 1111 toward an upper end of the second cell end 1112.

The cell body 1110 may include two faces. For example, the cell body 1110 may include the first cell surface 1117 forming one face of the cell body 1110. In some implementations, the other face of the cell body 1110 may be referred to as "second cell face." The second cell face may be a face formed on the opposite side of the first cell face 1117.

The first cell face 1117 may form an edge. For example, the first cell end 1111, the second cell end 1112, the third cell end 1113, and the fourth cell end 1114 may form the edges of the first cell face 1117. For example, the first cell end 1111, the second cell end 1112, the third cell end 1113, and the fourth cell end 1114 may form an edge of the second cell face.

The first cell face 1117 may be directed forward or may be a forward facing portion of the cell body 1110. The first cell face 1117 may form a front face of the cell body 1110. The first cell face 1117 may be referred to as the front face of the cell body 1110. Alternatively, the first cell surface 1117 may be referred to as a front face of the battery cell 1100.

The second cell face may be directed rearward or may be a rearward facing portion of the cell body 1110. The second cell face may form a rear face of the cell body 1110. The second cell face may be referred to as the rear face of the cell body 1110. Alternatively, the second cell face may be referred to as a rear face of the battery cell 1100.

A thickness direction of the cell body 1110 may be parallel to a direction from one face to the other surface formed on the cell body 1110. For example, the thickness direction of the cell body 1110 may be parallel to a direction from the first cell face 1117 to the second cell face of the cell body 1110. For example, the thickness direction of the cell body 1110 may be a front-rear direction between forward and rearward sides of the battery module. For example, the thickness direction of the battery cell 1100 may be parallel to the front-rear direction.

A width direction of the cell body 1110 may be a direction crossing the longitudinal direction of the battery cell 1100 on one face of the cell body 1110. For example, the width direction of the cell body 1110 may be formed on the first cell face 1117. For example, the width direction of the cell body 1110 may be parallel to a direction from the third cell end 1113 to the fourth cell end 1114. For example, the width direction of the cell body 1110 may be an up-down direction between a top end and a bottom end of the one face of the cell body 1110. For example, the width direction of the battery cell 1100 may be parallel to the up-down direction.

For example, the width direction of the cell body 1110 may be perpendicular to a longitudinal direction of the cell body 1110. For example, the width direction of the cell body 1110 may be perpendicular to the thickness direction of the cell body 1110.

The battery cell 1100 may include an electrode lead 1120. The electrode lead 1120 may protrude from the cell body 1110. In some implementations, the electrode lead 1120 may form a shape protruding from both ends of the cell body 1110. For example, the electrode lead 1120 may include a first protruding shape portion that protrudes from the first cell end 1111 of the cell body 1110 and a second protruding shape portion that protrudes from the second cell end 1112 of the cell body 1110. The electrode lead 1120 may be formed of a material containing metal.

In some implementations, the electrode lead 1120 may form a shape protruding from at least one of the ends of the cell body 1110. For example, the electrode lead 1120 may include a first electrode lead 1121 of a shape protruding from the first cell end 1111. For example, the electrode lead 1120 may include a second electrode lead 1122 of a shape protruding from the second cell end 1112.

FIG. 2 illustrates a battery cell assembly 100 based on an embodiment of the disclosed technology.

Referring to FIGS. 1 and 2, the battery cell assembly 100 may include a plurality of battery cells 1100. For example, the battery cell assembly 100 may include a first battery cell 1101, a second battery cell 1102, a third battery cell 1103, and a fourth battery cell 1104.

The plurality of battery cells 1100 belonging to one battery cell assembly 100 may be stacked or disposed in one direction. For example, the plurality of battery cells 1110 belonging to one battery cell assembly 100 may be stacked or disposed in the front-rear direction. The number of the plurality of battery cells 1100 belonging to one battery cell assembly 100 may be an even number.

For example, in a case where two adjacent battery cells 1100 of the plurality of battery cells 1110 belonging to one battery cell assembly 100 include a rear battery cell 1100 and a front battery cell 1100, a front face of the rear battery cell 1100 of the two adjacent battery cells 1100 may face or in contact with a rear face of the front battery cell 1100 of the two adjacent battery cells 1100. For example, a first cell face 1117 of the rear battery cell 1100 may face or in contact with a second cell face of the front battery cell 1100.

For example, in a case where the two adjacent battery cells 1100 of the plurality of battery cells 1110 belonging to one battery cell assembly 100 include the rear battery cell 1100 and the front battery cell 1100, a first electrode lead 1121 of the rear battery cell 1100 may face a first electrode lead 1121 of the front battery cell 1100.

For example, in a case where the two adjacent battery cells 1100 of the plurality of battery cells 1110 belonging to one battery cell assembly 100 include the rear battery cell 1100 and the front battery cell 1100, a second electrode lead 1122 of the rear battery cell 1100 may face a second electrode lead 1122 of the front battery cell 1100.

In some implementations, the term "first side of the battery cell assembly 100" may refer to a portion of one battery cell assembly 100 where the first electrode lead 1121 is positioned. In some implementations, the term "first lateral direction of the battery cell assembly 100" may indicate a direction from the second electrode lead 1122 to the first electrode lead 1121 in one battery assembly 100.

In some implementations, the term "second side of the battery cell assembly 100" may refer to a portion of one battery cell assembly 100 where the second electrode lead 1122 is positioned. In some implementations, the term "second lateral direction of the battery cell assembly 100" may indicate a direction from the first electrode lead 1121 to the second electrode lead 1122 in one battery assembly 100.

The battery cell assembly 100 may include a plurality of battery cell groups 1000. For example, a plurality of battery cell groups 1000 may belong to one battery cell assembly 100. For example, the battery cell assembly 100 may include a first battery cell group 1001 and a second battery cell group 1002.

The battery cell group 1000 may include a plurality of battery cells 1100. The plurality of battery cells 1100 belonging to one battery cell group 1000 may be connected to each other in parallel.

For example, a first battery cell 1101 and a second battery cell 1102 belonging to the first battery cell group 1001 may be connected to each other in parallel. For example, a third battery cell 1103 and a fourth battery cell 1104 belonging to the second battery cell group 1002 may be connected to each other in parallel.

The plurality of battery cell groups 1000 may be connected to each other. For example, the plurality of battery cell groups 1000 may be sequentially and electrically connected to each other. For example, the plurality of battery cell groups 1000 may be sequentially and electrically connected in series. For example, the first battery cell group 1001 and the second battery cell group 1002 may be sequentially and electrically connected in series.

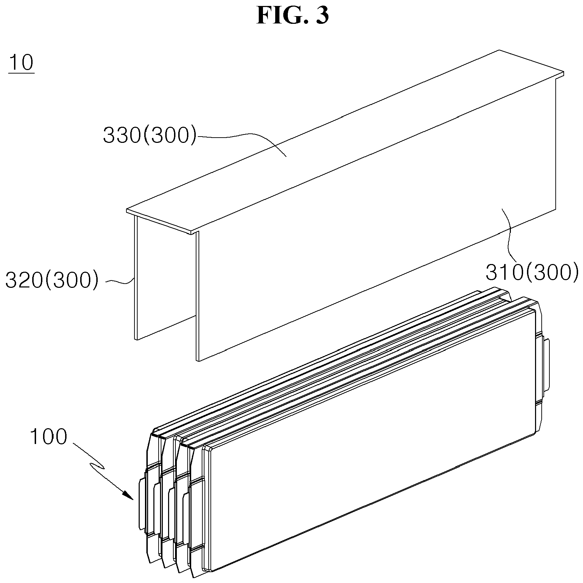

FIG. 3 illustrates a sub-battery unit including a housing based on an embodiment of the disclosed technology. In FIG. 3, a state in which a housing 300 is separated from the battery cell assembly 100 may be illustrated for convenience of description.

Referring to FIG. 3, a sub-battery unit 10 based on an embodiment of the disclosed technology may include the battery cell assembly 100 and the housing 300. The housing 300 may be coupled to the battery cell assembly 100.

The housing 300 may form an accommodation space. The housing 300 may accommodate the battery cell assembly 100. For example, the battery cell assembly 100 may be positioned in the accommodation space formed in the housing 300.

The accommodation space formed in the housing 300 may be open downward. The accommodation space formed in the housing 300 may be open in first and second lateral directions.

The housing 300 may include a housing front part 310. The housing front part 310 may be positioned in front of the battery cell assembly 100 belonging to one sub-battery unit 10. The housing front part 310 may form a front face of the sub-battery unit 10 or a front face of the housing 300.

The housing 300 may include a housing rear part 320. The housing rear part 320 may be positioned behind the battery cell assembly 100 belonging to one sub-battery unit 10. The housing rear part 320 may form a rear face of the sub-battery unit 10 or a rear face of the housing 300.

The housing 300 may include a housing top part 330. The housing top part 330 may form a shape that extend rearward from the housing front part 310 and is connected to the housing rear part 320. The housing top part 330 may form an upper face of the sub-battery unit 10 or an upper face of the housing 300.

For example, a front end of the housing top part 330 may be connected or coupled to an upper end of the housing front part 310. For example, a rear end of the housing top part 330 may be connected or coupled to an upper end of the housing rear part 320. The housing top part 330 may be disposed above the battery cell assembly 100 belonging to one sub-battery unit 10.

For example, the battery cell assembly 100 belonging to one sub-battery unit 10 may be disposed between the housing front part 310 and the housing rear part 320. For example, the battery cell assembly 100 belonging to one sub-battery unit 10 may be disposed below the housing top part 330.

The housing front part 310, the housing top part 330, and the housing rear part 320 may be sequentially connected. The housing front part 310, the housing top part 330, and the housing rear part 320 may be formed as an unibody which integrates the housing front part 310, the housing top part 330, and the housing rear part 320 as part of a contiguous or integral structure.

The housing 300 may be formed of a material including metal. For example, the housing 300 may be formed of a material including at least one of aluminum or stainless steel.

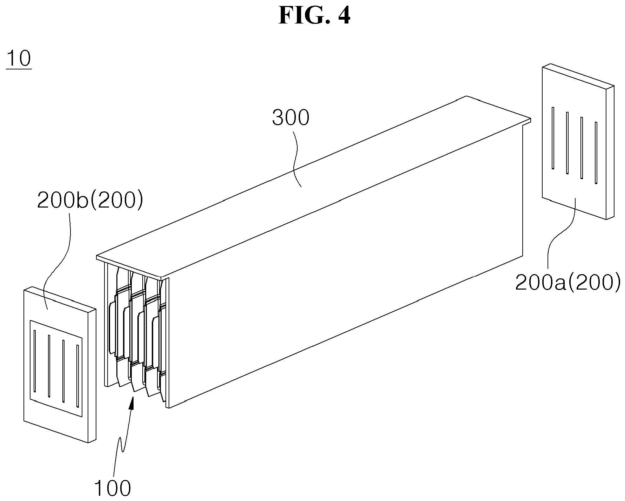

FIG. 4 illustrates a sub-battery unit including a bus bar unit. FIG. 4 shows a bus bar unit 200 as being separated from the battery cell assembly 100 for convenience of description.

Referring to FIG. 4, the sub-battery unit 10 may include the bus bar unit 200. The bus bar unit 200 may be coupled to the electrode lead 1120 (see FIG. 1) of the battery cell 1100 (see FIG. 1). The bus bar unit 200 may be electrically connected to the plurality of battery cells 1100 (see FIG. 1) included in one sub-battery unit 10.

The bus bar unit 200 may include a first-side bus bar unit 200a. The first-side bus bar unit 200a may be positioned on a first side of the battery cell assembly 100. The first-side bus bar unit 200a may be coupled to a first electrode lead 1121 (see FIG. 1) of each of the plurality of battery cells 1100 (see FIG. 1) belonging to one battery cell assembly 100.

The bus bar unit 200 may include a second-side bus bar unit 200b. The second-side bus bar unit 200b may be positioned on a second side of the battery cell assembly 100. The second-side bus bar unit 200b may be coupled to a second electrode lead 1122 (see FIG. 1) of each of the plurality of battery cells 1100 (see FIG. 1) belonging to one battery cell assembly 100.

The bus bar unit 200 may be coupled or connected to the housing 300. For example, the first-side bus bar unit 200a may be coupled or connected to a first side or a first side end of the housing 300. The first side or the first side end of the housing 300 may be adjacent to the first side of the battery cell assembly 100.

For example, the second-side bus bar unit 200b may be coupled or connected to a second side or a second side end of the housing 300. The second side or the second side end of the housing 300 may be adjacent to the second side of the battery cell assembly 100.

The housing 300 may extend from a first side end to a second side end of the housing 300. The housing front part 310 may extend from a first side end to a second side end of the housing front part 310. The housing rear part 320 may extend from a first side end to a second side end of the housing rear part 320. The housing top part 330 may extend from a first side end to a second side end of the housing top part 330.

The first side end of the housing front part 310, the first side end of the housing top part 330, and the first side end of the housing rear part 320 may be sequentially disposed or connected. The second side end of the housing front part 310, the second side end of the housing top part 330, and the second side end of the housing rear part 320 may be sequentially disposed or connected.

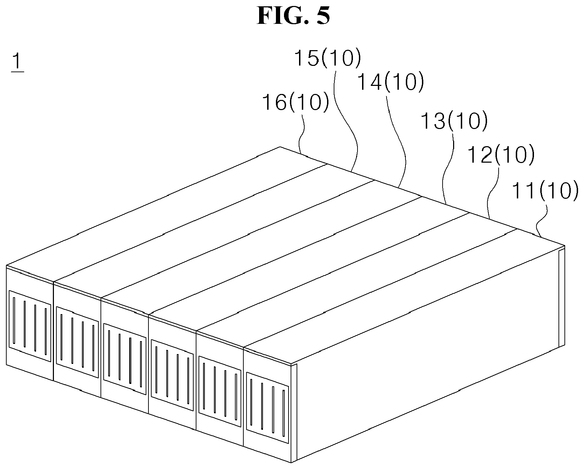

FIG. 5 illustrates a battery module based on an embodiment of the disclosed technology.

Referring to FIG. 5, a battery module 1 may include at least one sub-battery unit 10. For example, the battery module 1 may include a plurality of sub-battery units 10.

For example, the plurality of sub-battery units 10 may include a first sub-battery unit 11, a second sub-battery unit 12, a third sub-battery unit 13, a fourth sub-battery unit 14, a fifth sub-battery unit 15, and a sixth sub-battery unit 16. The plurality of sub-battery units 10 may be sequentially stacked or arranged. For example, the plurality of sub-battery units 10 may be stacked or arranged in a front-rear direction.

In two adjacent sub-battery units 10 among the plurality of sub-battery units 10, a front face of a rear sub-battery unit 10 of the two adjacent sub-battery units 10 may face or contact a rear surface of a front sub-battery unit 10 of the two adjacent sub-battery units 10. For example, a housing front part 310 (see FIG. 3) of the rear sub-battery unit 10 may face or contact a housing rear part 320 (see FIG. 3) of the front sub-battery unit 10. For example, a housing front part 310 (see FIG. 3) of the third sub-battery unit 13 may face or contact a housing rear part 320 (see FIG. 3) of the second sub-battery unit 12.

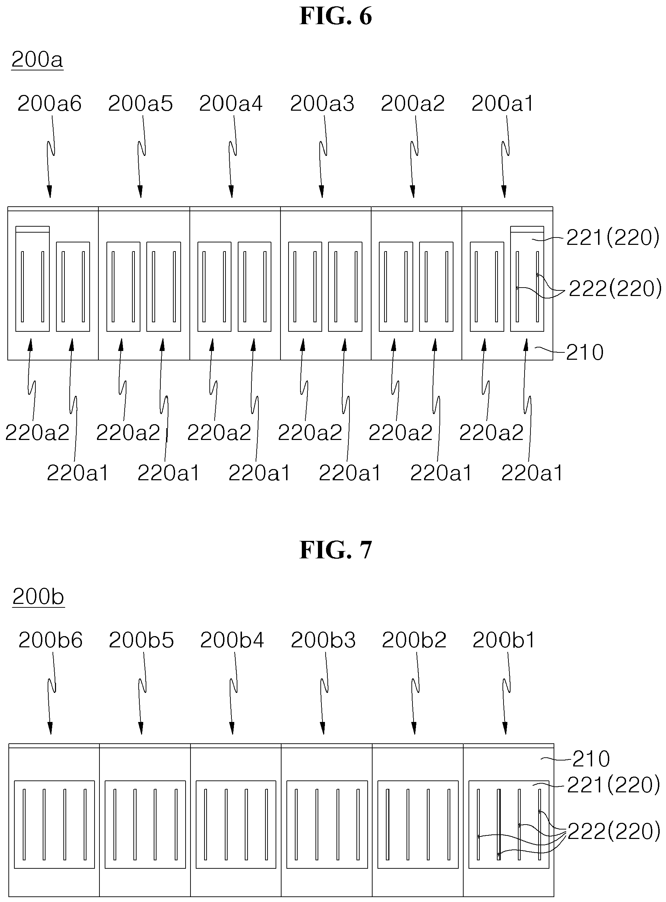

FIG. 6 illustrates a first-side bus bar unit based on an embodiment of the disclosed technology. More specifically, FIG. 6 illustrates the first-side bus bar unit 200a when viewed from the front of the battery module 1 illustrated in FIG. 5.

Referring to FIG. 6, a plurality of first-side bus bar units 200a may be provided. The plurality of first-side bus bar units 200a may correspond to the plurality of sub-battery units 10 (see FIG. 5).

For example, the first-side bus bar unit 200a may include a first first-side bus bar unit 200a1 coupled to the first sub-battery unit 11 (see FIG. 5), a second first-side bus bar unit 200a2 coupled to the second sub-battery unit 12 (see FIG. 5), a third first-side bus bar unit 200a3 coupled to the third sub-battery unit 13 (see FIG. 5), a fourth first-side bus bar unit 200a4 coupled to the fourth sub-battery unit 14 (see FIG. 5), a fifth first-side bus bar unit 200a5 coupled to the fifth sub-battery unit 15 (see FIG. 5), and a sixth first-side bus bar unit 200a6 coupled to the sixth sub-battery unit 16 (see FIG. 5).

The first-side bus bar unit 200a may include a bus bar 220. One sub-battery unit 10 (see FIG. 5) may include at least one bus bar 220. For example, the first-side bus bar unit 200a of one sub-battery unit 10 (see FIG. 5) may include two bus bars 220.

For example, the first-side bus bar unit 200a of one sub-battery unit 10 (see FIG. 5) may include a first first-side bus bar 220a1 and a second first-side bus bar 220a2.

In a case where the plurality of sub-battery units 10 includes two adjacent sub-battery units 10 (see FIG. 5), a first first-side bus bar 220a1 of a rear sub-battery unit 10 (see FIG. 5) of the two adjacent sub-battery units 10 may be electrically connected to a second first-side bus bar 220a2 of a front sub-battery unit 10 (see FIG. 5) of the two adjacent sub-battery units 10.

In other words, a first first-side bus bar 220a1 of a rear first-side bus bar unit 200a of the two adjacent first-side bus bar units 200a may be electrically connected to a second first-side bus bar 220a2 of a front first-side bus bar unit 200a of the two adjacent first-side bus bar units 200a. For example, a first first-side bus bar 220a1 of the fourth first-side bus bar unit 200a4 may be electrically connected or coupled to a second first-side bus bar 220a2 of the third first-side bus bar unit 200a3. In some implementations, the bus bars 220 may be coupled or electrically connected to each other using at least one of a conductive adhesive, a conductive tape, or welding.

The battery cell assembly 100 belonging to one sub-battery unit 10 (see FIG. 5) may include two battery cell groups 1000 (see FIG. 2). First sides of two battery cell groups 1000 (see FIG. 2) belonging to one sub-battery unit 10 (see FIG. 5) may be connected to two bus bars 220 of the first-side bus bar unit 200a, respectively.

For example, the first battery cell group 1001 (see FIG. 2) belonging to one sub-battery unit 10 (see FIG. 5) may be connected to the first first-side bus bar 220a1. For example, the second battery cell group 1002 (see FIG. 2) belonging to one sub-battery unit 10 (see FIG. 5) may be connected to the second first-side bus bar 220a2.

The bus bar 220 may include a bus bar plate 221. The bus bar plate 221 may be formed of a material including metal. The bus bar 220 may include a bus bar slit 222 formed in the bus bar plate 221. The electrode lead 1120 (see FIG. 1) may be inserted into the bus bar slit 222 and coupled to the bus bar plate 221.

The first-side bus bar unit 200a may include a bus bar support 210. The bus bar support 210 may support the bus bar 220. The bus bar support 210 may be formed of a material including an electrical insulating material. For example, the bus bar support 210 may be formed of a material including plastic.

An inner surface of the bus bar support 210 may face the cell body 1110 (see FIG. 1). An outer surface of the bus bar support 210 may face the bus bar 220. The outer surface of the bus bar support 210 may be coupled to the bus bar 220.

The bus bar support 210 may include an opening corresponding to the bus bar slit 222. For example, the electrode lead 1120 (see FIG. 1) may be sequentially inserted into the opening of the bus bar support 210 and the bus bar slit 222 and may be coupled to the bus bar plate 221.

FIG. 7 illustrates a second-side bus bar unit based on an embodiment of the disclosed technology. More specifically, FIG. 7 illustrates the second-side bus bar unit 200b when viewed from the rear of the battery module 1 illustrated in FIG. 5.

Referring to FIG. 7, a plurality of second-side bus bar units 200b may be provided. The plurality of second-side bus bar units 200b may correspond to the plurality of sub-battery units 10 (see FIG. 5).

For example, the second-side bus bar unit 200b may include a first second-side bus bar unit 200b 1 coupled to the first sub-battery unit 11 (see FIG. 5), a second second-side bus bar unit 200b2 coupled to the second sub-battery unit 12 (see FIG. 5), a third second-side bus bar unit 200b3 coupled to the third sub-battery unit 13 (see FIG. 5), a fourth second-side bus bar unit 200b4 coupled to the fourth sub-battery unit 14 (see FIG. 5), a fifth second-side bus bar unit 200b5 coupled to the fifth sub-battery unit 15 (see FIG. 5), and a sixth second-side bus bar unit 200b6 coupled to the sixth sub-battery unit 16 (see FIG. 5).

The second-side bus bar unit 200b may include a bus bar 220. One sub-battery unit 10 (see FIG. 5) may include one bus bar 220. Second sides of the two battery cell groups 1000 (see FIG. 2) belonging to one sub-battery unit 10 (see FIG. 5) may be connected to one bus bar 220 of the second-side bus bar unit 200b.

Referring to FIGS. 6 and 7, first sides of the two battery cell groups 1000 (see FIG. 2) belonging to one sub-battery unit 10 (see FIG. 5) may be respectively connected to the two bus bars 220 of the first-side bus bar unit 200a, and second sides of the two battery cell groups 1000 (see FIG. 2) belonging to one sub-battery unit 10 (see FIG. 5) may be connected to one bus bar 220 of the second-side bus bar unit 200b.

The plurality of battery cells 1100 (see FIG. 2) included in each of the plurality of battery cell groups 1000 (see FIG. 2) belonging to one sub-battery unit 10 (see FIG. 5) may be electrically connected in parallel. For example, the plurality of battery cells 1100 (see FIG. 2) included in each of the two battery cell groups 1000 (see FIG. 2) belonging to one sub-battery unit 10 (see FIG. 5) may be electrically connected in parallel.

The plurality of battery cell groups 1000 (see FIG. 2) belonging to one sub-battery unit 10 (see FIG. 5) may be electrically connected in series. For example, the two battery cell groups 1000 (see FIG. 2) belonging to one sub-battery unit 10 (see FIG. 5) may be electrically connected in series.

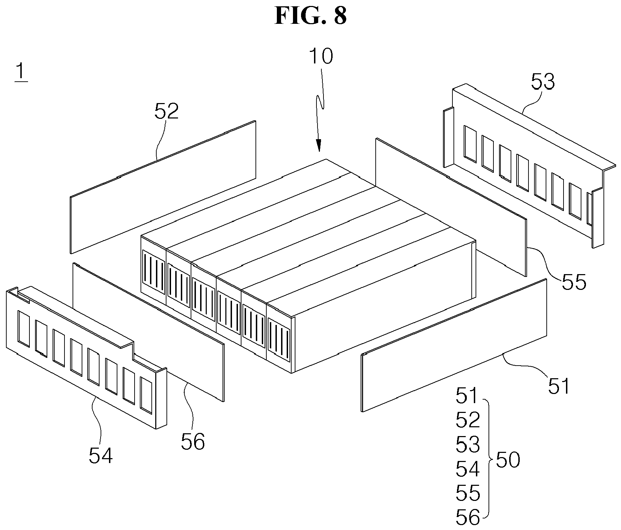

FIG. 8 illustrates a battery module including a cover unit. More specifically, FIG. 8 may be an exploded view of the battery module 1.

Referring to FIG. 8, the battery module 1 may include a cover unit 50. The cover unit 50 may cover the plurality of sub-battery units 10. The cover unit 50 may be coupled to the plurality of sub-battery units 10.

The cover unit 50 may include a front cover 51. The front cover 51 may form a front face of the battery module 1. The front cover 51 may be disposed in front of the plurality of sub-battery units 10.

The cover unit 50 may include a rear cover 52. The rear cover 52 may form a rear face of the battery module 1. The rear cover 52 may be disposed behind the plurality of sub-battery units 10.

The cover unit 50 may include a first side cover 53. The first side cover 53 may be disposed on the first sides of the plurality of sub-battery units 10. For example, the first side cover 53 may cover the first sides of the plurality of sub-battery units 10.

The cover unit 50 may include a second side cover 54. The second side cover 54 may be disposed on the second sides of the plurality of sub-battery units 10. For example, the second side cover 54 may cover the second sides of the plurality of sub-battery units 10.

The cover unit 50 may include a first insulating member 55. The first insulating member 55 may be disposed between the plurality of sub-battery units 10 and the first side cover 53. The first insulating member 55 may be formed of a material including an electrical insulating material.

The cover unit 50 may include a second insulating member 56. The second insulating member 56 may be disposed between the plurality of sub-battery units 10 and the second side cover 54. The second insulating member 56 may be formed of a material including an electrical insulating material.

The insulating members 55 and 56 may include or indicate at least one of the first insulating member 55 or the second insulating member 56. The side covers 53 and 54 may include or indicate at least one of the first side cover 53 or the second side cover 54.

The insulating members 55 and 56 may cover the bus bar 220 (see FIGS. 6 and 7). The bus bar 220 (see FIGS. 6 and 7) may not be exposed to the outside by the insulating members 55 and 56.

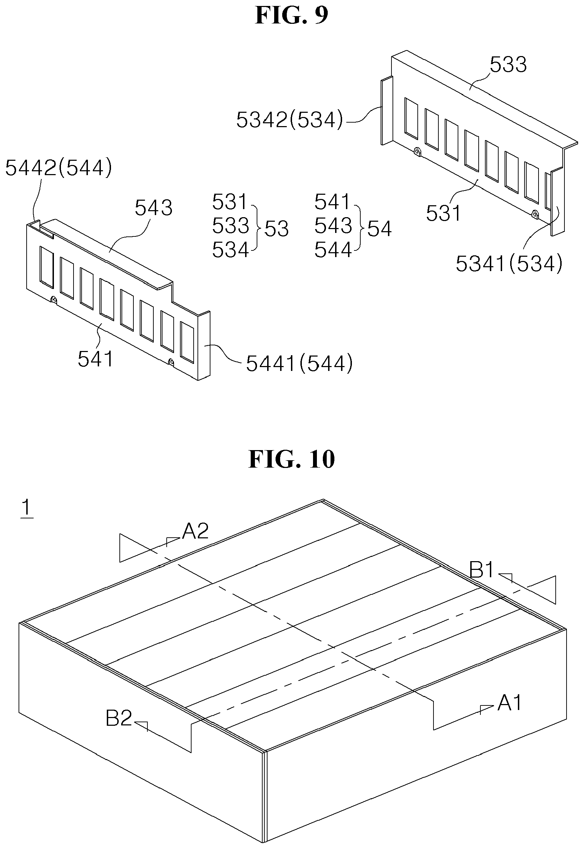

FIG. 9 illustrates in detail a first side cover and a second side cover based on an embodiment of the disclosed technology.

Referring to FIG. 9, the first side cover 53 may include a first side cover body 531. The first side cover body 531 may form a skeleton of the first side cover 53. The first side cover body 531 may form a shape of a plate. The first side cover body 531 may form a shape extending rearward from a front end and leading to a rear end. An inner surface of the first side cover body 531 may face the first insulating member 55 (see FIG. 8) and/or the plurality of sub-battery units 10 (see FIG. 8).

The second side cover 54 may include a second side cover body 541. The second side cover body 541 may form a skeleton of the second side cover 54. The second side cover body 541 may form a shape of a plate. The second side cover body 541 may form a shape extending rearward from a front end and leading to a rear end. An inner surface of the second side cover body 541 may face the second insulating member 56 (see FIG. 8) and/or the plurality of sub-battery units 10 (see FIG. 8).

The first side cover 53 may include a first side cover flange 533. The first side cover flange 533 may extend or protrude from the first side cover body 531 in the first lateral direction. For example, the first side cover flange 533 may extend from an upper end of the first side cover body 531 in the first lateral direction.

The second side cover 54 may include a second side cover flange 543. The second side cover flange 543 may extend or protrude from the second side cover body 541 in the second lateral direction. For example, the second side cover flange 543 may extend from an upper end of the second side cover body 541 in the second lateral direction.

The first side cover 53 may include a first side cover wing 534. The first side cover wing 534 may extend from the first side cover body 531 toward the second side cover 54.

For example, the first side cover 53 may include a front first side cover wing 5341 extending from a front end of the first side cover body 531 toward the second side cover 54. The front first side cover wing 5341 may form a front end portion of the first side cover 53.

For example, the first side cover 53 may include a rear first side cover wing 5342 extending from a rear end of the first side cover body 531 toward the second side cover 54. The rear first side cover wing 5342 may form a rear end portion of the first side cover 53.

The second side cover 54 may include a second side cover wing 544. The second side cover wing 544 may extend from the second side cover body 541 toward the first side cover 53.

For example, the second side cover 54 may include a front second side cover wing 5441 extending from a front end of the second side cover body 541 toward the first side cover 53. The front second side cover wing 5441 may form a front end portion of the second side cover 54.

For example, the second side cover 54 may include a rear second side cover wing 5442 extending from a rear end of the second side cover body 541 toward the first side cover 53. The rear second side cover wing 5442 may form a rear end portion of the second side cover 54.

The front side cover wings 5341 and 5441 may include or indicate at least one of the front first side cover wing 5341 or the front second side cover wing 5441.

The front side cover wings 5341 and 5441 may be coupled to the front cover 51 (see FIG. 8). For example, the front side cover wings 5341 and 5441 may be coupled to an outer surface of the front cover 51 (see FIG. 8).

For example, the front side cover wings 5341 and 5441 may cover an outer surface of an end of the front cover 51 (see FIG. 8). For example, the front first side cover wing 5341 may cover an outer surface of a first side end of the front cover 51 (see FIG. 8). For example, the front second side cover wing 5441 may cover an outer surface of a second side end of the front cover 51 (see FIG. 8).

The front side cover wings 5341 and 5441 may restrain the front cover 51 (see FIG. 8). For example, the front side cover wings 5341 and 5441 may prevent the front cover 51 (see FIG. 8) from moving forward.

The rear side cover wings 5342 and 5442 may include or indicate at least one of the rear first side cover wing 5342 or the rear second side cover wing 5442.

The rear side cover wings 5342 and 5442 may be coupled to the rear cover 52 (see FIG. 8). For example, the rear side cover wings 5342 and 5442 may cover the end of the rear cover 52 (see FIG. 8). For example, the rear first side cover wing 5342 may cover a first side end of the rear cover 52 (see FIG. 8). For example, the rear second side cover wing 5442 may cover a second side end of the rear cover 52 (see FIG. 8).

The rear side cover wings 5342 and 5442 may restrain the rear cover 52 (see FIG. 8). For example, the rear side cover wings 5342 and 5442 may prevent the rear cover 52 (see FIG. 8) from moving rearward.

FIG. 10 illustrates a battery module in which a cover unit is coupled to a plurality of sub-battery units.

Referring to FIGS. 8 to 10, the cover unit 50 may cover the plurality of sub-battery units 10. For example, the cover unit 50 may form a front face, a rear face, a first side surface, and a second side surface of the battery module 1.

A battery pack may include a plurality of battery modules 1. The battery pack may include a pack frame accommodating the plurality of battery modules 1. For example, the battery pack may be installed in a lower part of an electric vehicle.

Lower faces of the plurality of sub-battery units 10 may be exposed. The third cell end 1113 (see FIG. 1), which is a lower end of each of the plurality of battery cells 1100 (see FIG. 1), may be exposed to the outside. For example, the plurality of battery cells 1100 (see FIG. 1) may contact the pack frame. For example, the plurality of battery cells 1100 (see FIG. 1) may discharge heat through the pack frame.

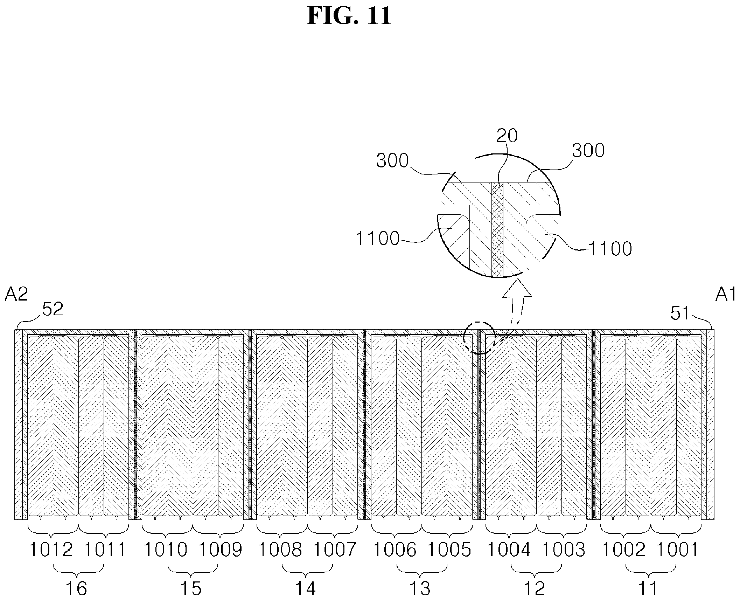

FIG. 11 is a cross-sectional view of a battery module taken along A1-A2 of FIG. 10.

Referring to FIG. 11, the battery module may include a pad 20. The pad 20 may be disposed between two adjacent sub-battery units 10. For example, the pad 20 may be disposed between the housings 300 of the two adjacent sub-battery units 10. For example, the pad 20 may be disposed between the housing front part 310 of a rear sub-battery unit 10 and the housing rear part 320 of a front sub-battery unit 10.

The pad 20 may have elasticity. The pad 20 can reduce an impact between two adjacent sub-battery units 10. The pad 20 may be formed of a material containing a flame retardant material. The pad 20 may be formed of a material containing a thermal insulation material.

Referring to FIGS. 5, 6, 7 and 11, the number of the plurality of battery cells 1100 belonging to one sub-battery unit 10 (see FIG. 5) may be an even number. For example, the plurality of battery cells 1100 belonging to one sub-battery unit 10 may be classified into a plurality of battery cell groups 1000.

For example, the plurality of battery cells 1100 belonging to one sub-battery unit 10 may be classified into two battery cell groups 1000. For example, the plurality of battery cells 1100 belonging to one sub-battery unit 10 may be classified into a first battery cell group 1001 and a second battery cell group 1002.

The first sub-battery unit 11 may include a first battery cell group 1001 and a second battery cell group 1002. The second sub-battery unit 12 may include a third battery cell group 1003 and a fourth battery cell group 1004. The third sub-battery unit 13 may include a fifth battery cell group 1005 and a sixth battery cell group 1006. The fourth sub-battery unit 14 may include a seventh battery cell group 1007 and an eighth battery cell group 1008. The fifth sub-battery unit 15 may include a ninth battery cell group 1009 and a tenth battery cell group 1010. The sixth sub-battery unit 16 may include an eleventh battery cell group 1011 and a twelfth battery cell group 1012.

One battery cell group of two battery cell groups of one sub-battery unit 10 may be referred to as a "first battery cell group," and the other may be referred to as a "second battery cell group." For example, in the fifth sub-battery unit 15, the ninth battery cell group 1009 may be referred to as a "first battery cell group," and the tenth battery cell group 1010 may be referred to as a "second battery cell group."

Although not illustrated, the bus bar units 200 (see FIG. 4) of two adjacent sub-battery units 10 may be connected to each other. For example, the first-side bus bar units 200a of the two adjacent sub-battery units 10 may be connected to each other.

For example, the second first-side bus bar 220a2 of the first first-side bus bar unit 200a1 connected to the second battery cell group 1002 may be electrically connected to the first first-side bus bar 220a1 of the second first-side bus bar unit 200a2 connected to the third battery cell group 1003.

For example, the second first-side bus bar 220a2 of the second first-side bus bar unit 200a2 connected to the fourth battery cell group 1004 may be electrically connected to the first first-side bus bar 220a1 of the third first-side bus bar unit 200a3 connected to the fifth battery cell group 1005.

For example, the second first-side bus bar 220a2 of the third first-side bus bar unit 200a3 connected to the sixth battery cell group 1006 may be electrically connected to the first first-side bus bar 220a1 of the fourth first-side bus bar unit 200a4 connected to the seventh battery cell group 1007.

For example, the second first-side bus bar 220a2 of the fourth first-side bus bar unit 200a4 connected to the eighth battery cell group 1008 may be electrically connected to the first first-side bus bar 220a1 of the fifth first-side bus bar unit 200a5 connected to the ninth battery cell group 1009.

For example, the second first-side bus bar 220a2 of the fifth first-side bus bar unit 200a5 connected to the tenth battery cell group 1010 may be electrically connected to the first first-side bus bar 220a1 of the sixth first-side bus bar unit 200a6 connected to the eleventh battery cell group 1011.

Accordingly, the plurality of battery cell groups 1000 may be electrically connected in series. For example, the first battery cell group 1001, the second battery cell group 1002, the third battery cell group 1003, the fourth battery cell group 1004, the fifth battery cell group 1005, the sixth battery cell group 1006, the seventh battery cell group 1007, the eighth battery cell group 1008, the ninth battery cell group 1009, the tenth battery cell group 1010, the eleventh battery cell group 1011, and the twelfth battery cell group 1012 may be sequentially and electrically connected.

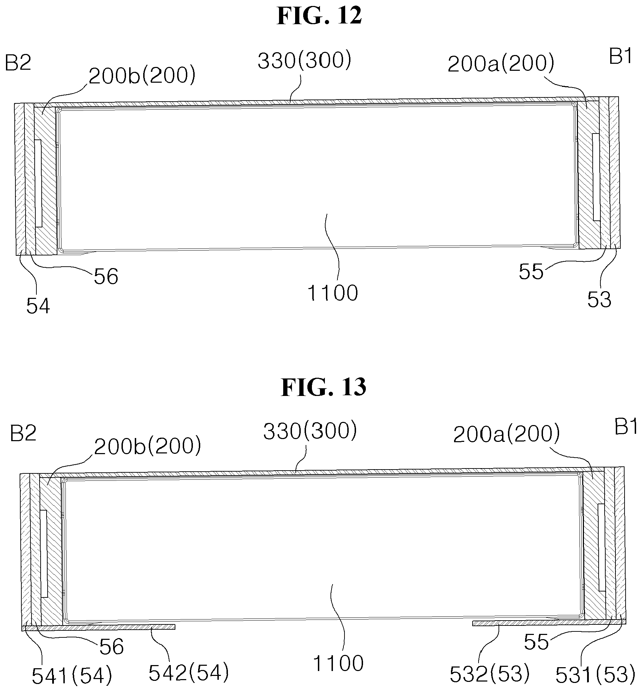

FIG. 12 is a cross-sectional view of a battery module taken along B1-B2 of FIG. 10.

Referring to FIG. 12, the first-side bus bar unit 200a may be positioned on a first side of the battery cell 1100. The first-side bus bar unit 200a may be coupled to the first electrode lead 1121 (see FIG. 1) of the battery cell 1100. The first-side bus bar unit 200a may be covered by the first side cover 53.

The second-side bus bar unit 200b may be positioned on a second side of the battery cell 1100. The second-side bus bar unit 200b may be coupled to the second electrode lead 1122 (see

FIG. 2) of the battery cell 1100. The second-side bus bar unit 200b may be covered by the second side cover 54.

Referring to FIGS. 5 to 12, the battery module 1 may include the plurality of sub-battery units 10, the front cover 51, and the rear cover 52. The plurality of sub-battery units 10 may be sequentially connected or coupled through an adhesive, or others.

The pad 20 may connect or combine the two adjacent sub-battery units 10. The pad 20 may include an adhesive component. For example, the pad 20 may have thermal-adhesive properties.

FIG. 13 is a cross-sectional view of a battery module taken along B1-B2 of FIG. 10 and illustrates a side cover including a side cover bottom.

Referring to FIG. 13, the first side cover 53 may include a first side cover bottom 532 extending from a lower end of the first side cover body 531 toward the second side cover 54.

The first side cover bottom 532 may be positioned under the plurality of sub-battery units 10 (see FIG. 8). For example, the first side cover bottom 532 may be positioned under the first side ends of the plurality of sub-battery units 10 (see FIG. 8).

The second side cover 54 may include a second side cover bottom 542 extending from a lower end of the second side cover body 541 toward the first side cover 53.

The second side cover bottom 542 may be positioned under the plurality of sub-battery units 10 (see FIG. 8). For example, the second side cover bottom 542 may be positioned under the second side ends of the plurality of sub-battery units 10 (see FIG. 8).

The side cover bottoms 532 and 542 may include or indicate at least one of the first side cover bottom 532 or the second side cover bottom 542. The side covers 53 and 54 may include the side cover bottoms 532 and 542.

The side cover bottoms 532 and 542 may be positioned below both ends of the plurality of sub-battery units 10 (see FIG. 8). The side cover bottoms 532 and 542 may support the plurality of sub-battery units 10 (see FIG. 8) from below.

The first side cover bottom 532 and the second side cover bottom 542 may be spaced apart from each other. The lower ends of the plurality of battery cells 1100 included in the plurality of sub-battery units 10 (see FIG. 8) may be exposed between the first side cover bottom 532 and the second side cover bottom 542.

Referring to FIGS. 1 to 13, each of the plurality of sub-battery units 10 may include the housing 300. In some implementations, the housing 300 surrounds the plurality of battery cells 1100. When a fire occurs in the battery cell 1100 included in the sub-battery unit 10, the housing 300 can prevent the spread of the fire.

When a fire occurs in the sub-battery unit 10, the housing 300 may induce dust, gas and flame caused by the fire to move toward the side covers 53 and 54. In other words, when the fire occurs in the sub-battery unit 10, the dust, gas and flame caused by the fire may flow in the housing 300 toward the side covers 53 and 54. That is, it is possible to effectively cope with a fire in the battery module 1 by installing a device for removing dust/gas, etc. around the side covers 53 and 54 of the battery module 1.

The disclosed technology can be implemented in rechargeable secondary batteries that are widely used in battery-powered devices or systems, including, e.g., digital cameras, mobile phones, notebook computers, hybrid vehicles, electric vehicles, uninterruptible power supplies, battery storage power stations, and others including battery power storage for solar panels, wind power generators and other green tech power generators. Specifically, the disclosed technology can be implemented in some embodiments to provide improved electrochemical devices such as a battery used in various power sources and power supplies, thereby mitigating climate changes in connection with uses of power sources and power supplies. Lithium secondary batteries based on the disclosed technology can be used to address various adverse effects such as air pollution and greenhouse emissions by powering electric vehicles (EVs) as alternatives to vehicles using fossil fuel-based engines and by providing battery-based energy storage systems (ESSs) to store renewable energy such as solar power and wind power.

Only specific examples of implementations of certain embodiments are described. Variations, improvements and enhancements of the disclosed embodiments and other embodiments may be made based on the disclosure of this patent document.

## Claims

1. A battery module (1) comprising:
a plurality of sub-battery units (10) sequentially disposed in a front-rear direction, each of the plurality of sub-battery units (10) including a first end and a second end;
a first side cover (53) coupled to the first ends of the plurality of sub-battery units (10); and
a second side cover (54) coupled to the second ends of the plurality of sub-battery units (10) and positioned opposite the first side cover (53),
wherein each of the plurality of sub-battery units (10) includes:
a housing (300) open toward the first side cover (53), the second side cover (54), and a bottom of the housing (300); and
a plurality of battery cells (1100) accommodated in the housing (300) and sequentially disposed in the front-rear direction.

2. The battery module (1) of claim 1, wherein the first side cover (53) includes:
a first side cover body (531) facing the plurality of sub-battery units (10); and
a first side cover bottom (532) extending from a lower end of the first side cover body (531) toward the second side cover (54),
wherein the second side cover (54) includes:
a second side cover body (541) facing the plurality of sub-battery units (10); and
a second side cover bottom (542) extending from a lower end of the second side cover body (541) toward the first side cover (53),
preferably wherein the first side cover bottom (532) and the second side cover bottom (542) are spaced apart from each other.

3. The battery module (1) of claim 2, wherein the first side cover bottom (532) is positioned under the first end of each of the plurality of sub-battery units (10), and
wherein the second side cover bottom (542) is positioned under the second end of each of the plurality of sub-battery units (10).

4. The battery module (1) of any one of claims 1 to 3, further comprising:
a front cover (51) positioned in front of the plurality of sub-battery units (10); and
a rear cover (52) positioned behind the plurality of sub-battery units (10),
wherein the plurality of sub-battery units (10) is positioned between the front cover (51) and the rear cover (52).

5. The battery module (1) of claim 4, wherein a front end of the first side cover (53) and a front end of the second side cover (54) are coupled to the front cover (51), and
wherein a rear end of the first side cover (53) and a rear end of the second side cover (54) are coupled to the rear cover (52).

6. The battery module (1) of any one of claims 1 to 5, wherein the first side cover (53) includes:
a first side cover body (531) facing the plurality of sub-battery units (10);
a front first side cover wing (5341) extending from a front end of the first side cover body (531) toward the second side cover (54); and
a rear first side cover wing (5342) extending from a rear end of the first side cover body (531) toward the second side cover (54),
wherein the second side cover (54) includes:
a second side cover body (541) facing the plurality of sub-battery units (10);
a front second side cover wing (5441) extending from a front end of the second side cover body (541) toward the first side cover (53); and
a rear second side cover wing (5442) extending from a rear end of the second side cover body (541) toward the first side cover (53).

7. The battery module (1) of claim 6, wherein the front first side cover wing (5341) and the front second side cover wing (5441) are coupled to an outer surface of the front cover (51), and
wherein the rear first side cover wing (5342) and the rear second side cover wing (5442) are coupled to an outer surface of the rear cover (52).

8. The battery module (1) of any one of claims 1 to 7, wherein the housing (300) includes:
a housing front part (310) positioned in front of the plurality of battery cells (1100);
a housing rear part (320) positioned behind the plurality of battery cells (1100); and
a housing top part (330) positioned above the plurality of battery cells (1100) and connecting the housing front part (310) and the housing rear part (320),
preferably wherein the housing front part (310), the housing rear part (320) and the housing top part (330) are formed as a unibody,
and/or preferably wherein the housing 300 is formed of a material including at least one of aluminum or stainless steel.

9. The battery module (1) of any one of claims 1 to 8, wherein the battery module (1) includes a pad (20) disposed between two adjacent sub-battery units (10),
preferably wherein the pad (20) has elasticity,
and/or preferably wherein the pad (20) is formed of a material containing at least one of a flame retardant material and a thermal insulation material.

10. The battery module (1) of any one of claims 1 to 9, wherein each of the plurality of battery cells (1100) includes:
a cell body (1110) including a first end and a second end;
a first electrode lead (1121) protruding from the first end of the cell body (1110) toward the first side cover (53); and
a second electrode lead (1122) protruding from the second end of the cell body (1110) toward the second side cover (54).

11. The battery module (1) of any one of claims 1 to 10, wherein each of the plurality of battery cells (1100) has a front face and a rear face, and
wherein the front face of a rear battery cell of two adjacent battery cells (1100) of the plurality of battery cells (1100) faces and in contact with the rear face of a front battery cell (1100) of the two adjacent battery cells (1100) of the plurality of battery cells (1100).

12. The battery module (1) of any one of claims 1 to 11, wherein the plurality of battery cells (1100) includes an even number of battery cells, and
wherein the plurality of battery cells (1100) is classified into a first battery cell group and a second battery cell group.

13. The battery module (1) of any one of claims 10 to 12, further comprising:
a first-side bus bar unit (200a) coupled to the first electrode leads (1121) of the plurality of battery cells (1100); and
a second-side bus bar unit (200b) coupled to the second electrode leads (1122) of the plurality of battery cells (1100).

14. The battery module (1) of claim 13, wherein the first-side bus bar unit (200a) includes:
a first first-side bus bar (220a1) coupled to the first electrode lead (1121) of the battery cell included in the first battery cell group; and
a second first-side bus bar (220a2) coupled to the first electrode lead (1121) of the battery cell included in the second battery cell group,
wherein the second-side bus bar unit (200b) includes a second-side bus bar coupled to the second electrode leads (1122) of the plurality of battery cells (1100).

15. The battery module (1) of claim 14, wherein the first first-side bus bar of a rear sub-battery unit of two adjacent sub-battery units (10) of the plurality of sub-battery units (10) is electrically connected to the second first-side bus bar (220a2) of a front sub-battery unit (10) of the two adjacent sub-battery units (10) of the plurality of sub-battery units (10),
optionally wherein adjacent battery cell groups (1001, 1002) of the plurality of battery cell groups (1000) are electrically and sequentially connected in series.
